# EUROPEAN PATENT SPECIFICATION

(11) **EP 0 377 384 B1**
(45) Date of publication and mention of the grant of the patent: **31.01.1996**
(21) Application number: 89403683.9
(22) Date of filing: 29.12.1989
(51) Int. Cl.: B65C 1/02, B65C 9/18, B65C 9/22

(54) **A machine and a method for high speed, precisely registered label application**
Vorrichtung und Verfahren zum schnellen und genauen Etikettieren
Machine et procédé d'étiquetage rapide et précis

(30) Priority: 04.01.1989 US 293304
(43) Date of publication of application: 11.07.1990
(73) Proprietor: UNITED STATES TOBACCO COMPANY, Greenwich, Connecticut 06830 (US)
(72) Inventor: Paules, Eugene H., Huntington Connecticut 06484 (US)
(74) Representative: Derambure, Christian

(56) References cited:
- EP-A- 0 281 064
- DE-A- 1 909 151
- FR-A- 679 289
- FR-A- 2 415 047
- GB-A- 1 285 942
- US-A- 2 864 522
- US-A- 4 203 798

## Description

This invention relates to a machine and a method for applying labels to articles at high speeds; more particularly, the invention relates to a machine which transfers labels from a single web or from a single layer in combination with a glue application.

Present day article labeling machines comprise fairly complex mechanisms, the several operating components of which serve to transfer labels to various articles such as cans, bottles and like containers and packages. Due to the complexity, the interdependence and the several operating components of labeling machines, the maximum operating speed of these machines is normally limited to the slowest step in the process or to a rate limiting component in the machine. In many instances, the slowest steps and components comprise the label transfer and application means.

There is a substantial amount of prior art relating to label application equipment, however none of it discloses the present invention or its advantages.

For example, US-A-4,549,454 relates to a method whereby a strip of tape is cut at intervals, positioned and punched. The cut strips are held in place under vacuum.

US-A-4,323,416 relates to labeling equipment for applying wrap around labels to cylindrical containers.

US-A-4,283,245 relates to a bottle labeling apparatus comprising a conveyor for conveying evenly spaced-apart containers, and means for individually engaging containers and shifting containers laterally on the conveyor.

US-A-4,181,555 discloses a labeling apparatus and method for continuously severing labels from continuous label stock and applying the severed labels to containers.

US-A-3,883,388 discloses a machine for making a plastic covering on a rigid base article which comprises a glass bottle and a conforming shrunken plastic covering thereon.

US-A-3,751,324 relates to a high speed addressing machine for transferring labels to envelopes.

US-A-3,749,626 discloses a rotary die apparatus and a process for manufacturing labels.

US-A-3,348,525 relates to an apparatus for applying glue to bottles and other cylindrical articles.

US-A-3,142,374 relates to a hold-down device or head grip of the endless belt type for use in labeling machines.

US-A-2,342,504 relates to a process of applying protective spot material to the inner surfaces of caps, particularly crown caps commonly used on bottles.

GB-A-978,914 relates to a feed mechanism of the worm type used for releasing bottles or like articles in spaced sequence into labeling machines.

DE-A-19 09 151 describes a machine for applying a label, wherein the transfer wheel is horizontally rotatable, this transfer wheel not including raised pads which cooperate with vacuum means to apply continuous position pressure accross the entire label on the article.

According to the invention, the method for applying a label to a flat surface of an advanced article such as a container and the like comprises :
(i) supplying a label carrier tape from a carrier wheel to a vertically rotatable label transfer wheel ;
(ii) engaging said label carrier tape on said label transfer wheel by sprockets thereon in precise registry of said label with a raised pad for said label on said transfer wheel ;
(iii) removing a label from said carrier tape ;
(iv) holding said label by vacuum suction on said raised pad for said label on said transfer wheel ;
(v) removing the spent carrier tape from said transfer wheel ;
(vi) aligning synchronously said label on said raised pad (101) for said label on said transfer wheel (45) with the flat surface of said article as said article is advanced ;
(vii) applying positive pneumatic pressure to a leading edge of said label by means of said raised pad and retaining vacuum suction on the label behind the leading edge, upon placement of said label on said article, to remove said label from said raised pad for said label on said transfer wheel ;
(viii) continuously applying the pneumatic pressure throughout the label surface as rotation progresses ; and
(ix) continously advancing said article.

The machine for rapid application of labels from a label supply source to a flat surface of containers, comprises :
(i) a label supply source for labels on a continuous label carrier tape, said continuous tape comprising a plurality of labels evenly spaced apart with a plurality of sprocket holes for each label.
(ii) a rotatable transfer wheel for said labels for transferring individual labels onto a container, including sprocket means thereon ;
(iii) means for guiding said tape interconnected with positioning means for said label and sprocket means for said label on said rotational transfer means ;
(iv) means for severing individual labels from said continuous tape ;
(v) vacuum means within said rotational transfer wheel for precise registry of each individual label on a peripheral surface of said rotational transfer wheel for said label ;
(vi) means for removing the spent carrier tape ;
(vii) means for synchronous, precisely spaced apart advancing of a container with respect to the angular velocity of said rotational transfer wheel, and a label on said rotational tranfer wheel ;
(viii) means for cross-machine direction tangential application of pneumatic pressure within said rotational transfer wheel for exerting pressure on said label and said surface of the container in precise registry therewith wherein said means for cross-machine direction tangential application of pneumatic pressure comprising cooperable mechanical means and passage holes in the circumference of the label transfer wheel for exerting direct positive pressure on said label and said flat surface of said container by said rotational tranfer wheel for said labels.

According to the present invention, the machine is characterized in that :
(ix) said transfer wheel for said labels is vertically rotatable ;
(x) said label positioning means includes a plurality of raised pads provided with said passage holes and
(xi) in that said means for cross-machine direction tangential application of pneumatic pressure are designed to apply the pressure from the leading edge of said label continuously throughout said label.

### BRIEF DESCRIPTION OF THE DRAWINGS

Figure 1, is a perspective view of a machine embodiment of this invention.

Fig. 2 is a schematic view of a label being transferred from the carrier tape to the article.

Fig. 3 is a schematic side view of the high speed labeling machine of the present invention.

Fig. 4 is a side view of one embodiment of the high speed labeling machine of the present invention showing additional details.

Fig. 5 is a top view of the labeling machine and screw helices.

Fig. 6 is a more or less diagrammatic plan view illustrating means for spacing and orienting articles such as, for example, cans.

Fig. 7 is an enlarged side view, in section, showing details of the vacuum control mechanism for label manipulation and pressure means for label transfer from the label transfer wheel.

Fig. 8 is a cross-sectional view of the label transfer wheel of Fig. 7.

Fig. 9 is the same as Fig. 2 except that it additionally shows a die for cutting the labels.

Fig. 10 is the same as Fig. 7 except that it additionally shows the die cutter for the labels.

Fig. 11 is a cross sectional view of Fig. 10 and illustrates the die cutter in position for cutting a label held in place by the vacuum control mechanism.

Fig. 12 is a cross-sectional, enlarged view of a label release wheel in position.

### DETAILED DESCRIPTION OF THE DRAWINGS AND DESCRIPTION OF EMBODIMENTS OF THE PRESENT INVENTION

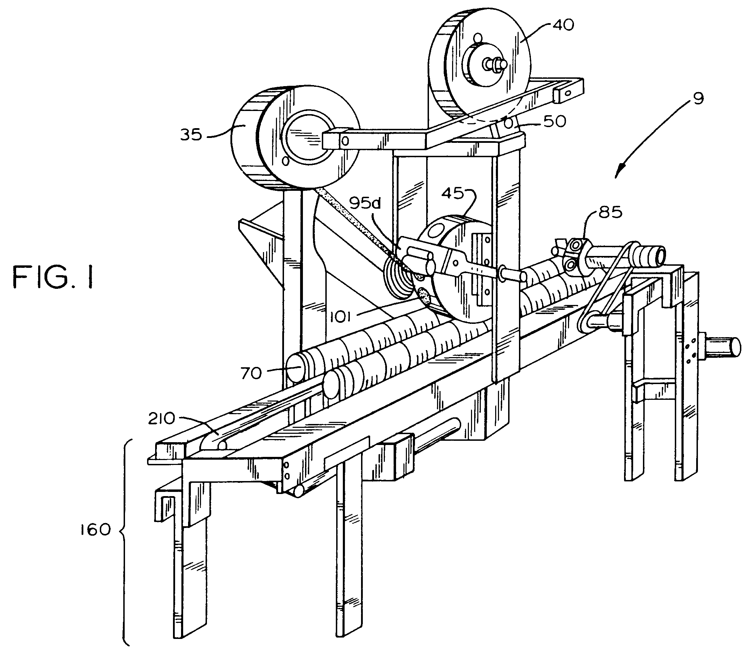

A perspective view of a machine embodiment of the invention is shown in Figure 1. Depicted is machine 9, having stand 160, supporting label reel 35, label transfer wheel 45, uptake reel 40, spent carrier tape 50, label pads 101 on label transfer wheel 45, conveyor chain 210, glue applicator wheel 85, screw helices 70 and tension control arm 95d. Details of the various components of the machine 9 will be described further herein.

The present invention as described herein uses a tractor feed styled label strip or tape to assure extremely close registry and precise positioning of labels articles at very high rates, e.g., 400 article per minute and more.

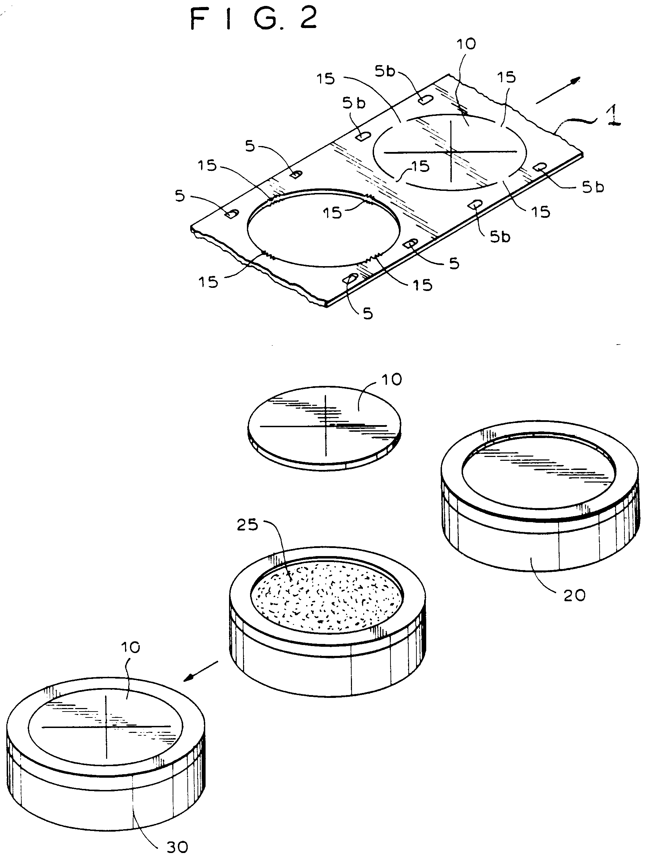

A schematic view of the tractor feed embodiment is shown in Fig. 2. A monoweb carrier tape 1 is provided utilizing sprocket holes 5 for properly and accurately aligning a label 10 that is die cut. In a departure from conventional sprocket holes cut for a tractor feed, in order to provide better registry and avoid problems from expansion or contraction caused by humidity, the sprocket holes are cut in the form of a tongue, but these are not severed from the web. A number of advantages reside in such an arrangement, e.g., rotational die cutting may be used. As mentioned before, sufficient tolerance for the expansion or contraction of a web due to humidity changes is provided by means of such sprocket hole 5 configuration. Consequently, sprocket holes 5 need not be cut oversize. A retained hole tab 5b also has an advantage in die cutting. Cut hole material interferes with the spooling of a web, while a retained hole tab 5b does not. Sprocket 5a (not shown here) may thus engage sprocket hole 5 with a great assurance of precision for positioning a label. Because of this precisely pre-cut sprocket hole 5 feature, the labels 10 may be preprinted before these are die cut. Likewise, the labels 10 may be die cut on the printing press. If the labels 10 are die cut on the printing press, these may be retained on a carrier by approximately four pin point-like, or tab-like attachments, 15. These pinpoint attachment tabs 15 may be greater or fewer in number and may be oriented around the periphery of the label as required for support and ease of severance. A label 10 is released and applied to an article such as a can 20. If a glue is used, the article 20 carries a deposited glue 25 and the label 10 is applied resulting in a labeled article 30.

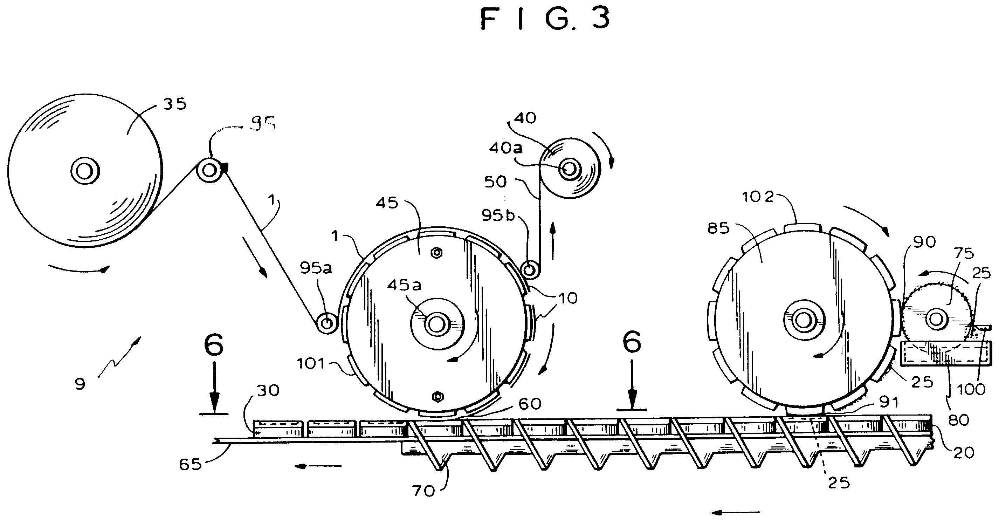

Referring now to Fig. 3, there is shown a side view of the high speed labeling machine 9 of the present invention. A label reel 35 supplies the pressure sensitive labels 10 of the carrier tape 1. However, the labels 10 are either precut or die cut on the machine herein and remain attached to the tape 1 by pinpoint attachment tabs 15 shown on Fig. 2. The carrier tape 1 is aligned by way of sprocket holes 5 (not shown on Fig. 3, but shown in Fig. 2) on either side of said tape. The expression "Carrier tape 1" is used to define a tape to which labels are attached by pinpoint attachment tabs 15. The left over stock tape after labels are excised is designated as spent carrier tape 50.

The carrier tape 1 is fed in the direction of the arrows as shown in Fig. 3 and held under constant tension by the roller 95. A free wheeling roller 95a is a feed-on roller for the carrier tape 1, and feeds the carrier tape 1 onto the label transfer wheel 45. Instead of being a freewheeling roller, roller 95a may also function as a constant tension roller, in which case roller 95 is eliminated. When thus functioning as constant tension roller, an eddy current driven clutch mechanism (not shown but readily available in the art) adjusts a braking force exerted on the carrier tape 1. Hence an appropriate tension control arm 95d, shown in Fig. 1, is used to weigh down roller 95a to compensate for the changing moment arm between the maximum and minimum radius of the carrier tape 1 when the carrier tape 1 is removed from label reel 35.

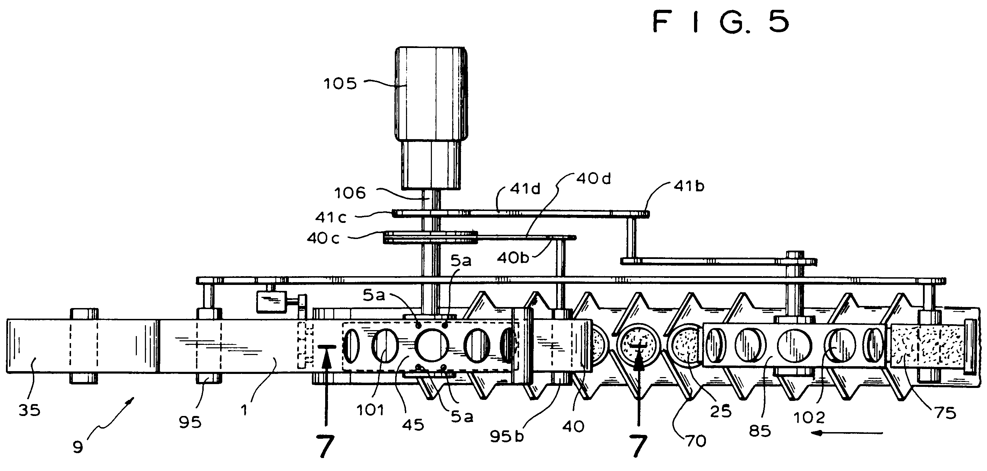

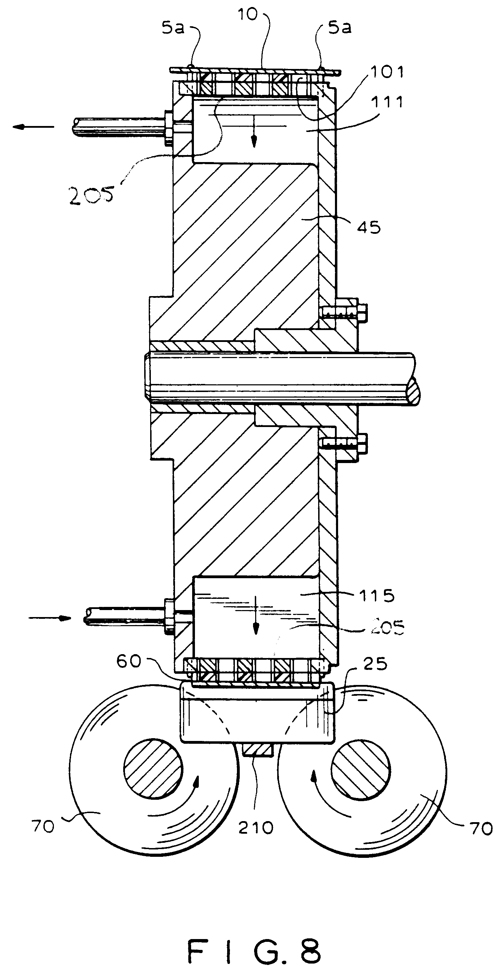

The label transfer wheel 45 has a drive shaft 45a. The label transfer wheel 45 carries on its outer periphery on each peripheral edge thereof sprockets 5a (shown in Fig. 8) which engage the sprocket holes 5. As each sprocket 5a engages sprocket hole 5, free wheeling roller 95a assures the subsequent positive engagement of the sprockets 5a in sprocket hole 5. As the drive shaft 45a turns all driving pulleys on the shaft 45a by a single motor 105 (shown in Fig. 5), positive, synchronous drive is assured for all driven pulleys. The use of sprocket holes 5 interacting with sprockets 5a, and the use of constant tape tension by roller 95a, provide precise alignment.

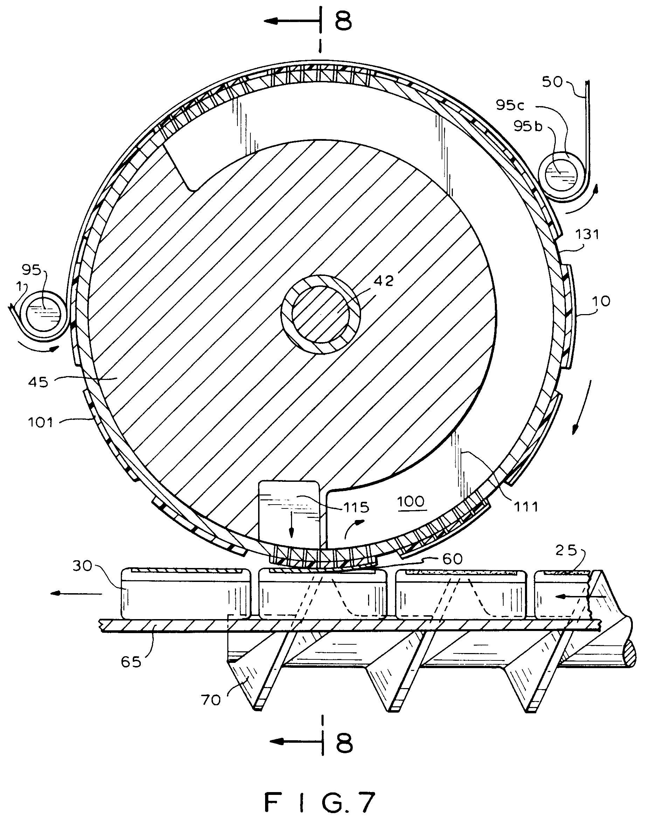

The label transfer wheel 45 holds the labels 10 by vacuum suction on label pads 101 while the spent carrier tape 50 is removed by uptake reel 40. As the label 10 needs to be positively removed from a carrier tape 1, roller 95b may carry on it a cam surface 95c (shown in Fig. 7) replicating in its form the label 10; i.e. round, square, oblong, etc. Uptake reel 40 is positively driven by motor 105 (shown in Fig. 5) via shaft 40a, pulleys 40b and 40c (shown in Fig. 5) and a toothed belt 40d (shown in Fig. 5) so that it rotates not synchronously with label transfer wheel 45 but via slip clutch 201 (not shown) to compensate for continuously variable core diameter. As spent carrier tape 50 is wound onto uptake reel 40, the diameter of uptake reel 40 increases. The slip clutch 201 compensates for this change in diameter so that uptake reel 40 rotates at a proper speed to ensure outstanding precision. As further shown in Figure 7, the label 10 is released by a pressure means 115 and thereby applied to an article at point 60 as will be further explained herein. Further, refinements in the vacuum suction step and pressure release step will also be discussed herein below.

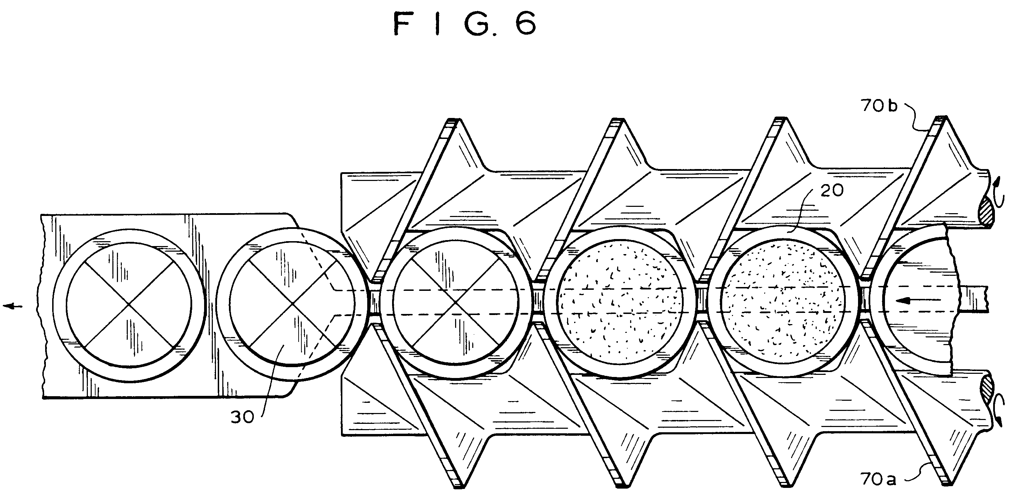

When applying non-pressure sensitive labels, depicted in Fig. 3 are means for applying glue 25 to the can 20. Glue supply wheel 75 picks up glue 25 from a glue supply source 80. A doctor blade 100 trims excess glue off the glue supply wheel 75. Glue 25 is applied to the glue pads 102 on glue applicator wheel 85 at point 90. The glue applicator wheel 85 turns in the direction of the arrow and deposits glue 25 at deposit point 91 on the articles, e.g., a can 20, which is to be labeled. The articles to be labeled, such as cans 20, are advanced by a conveyor means 65 and in a positive manner, between oppositely rotating screw helices 70 further shown in Fig. 6. An article 20 with glue 25 on its top surface continues along the conveyor means to point 60 where the label 10 is applied resulting in labeled article 30.

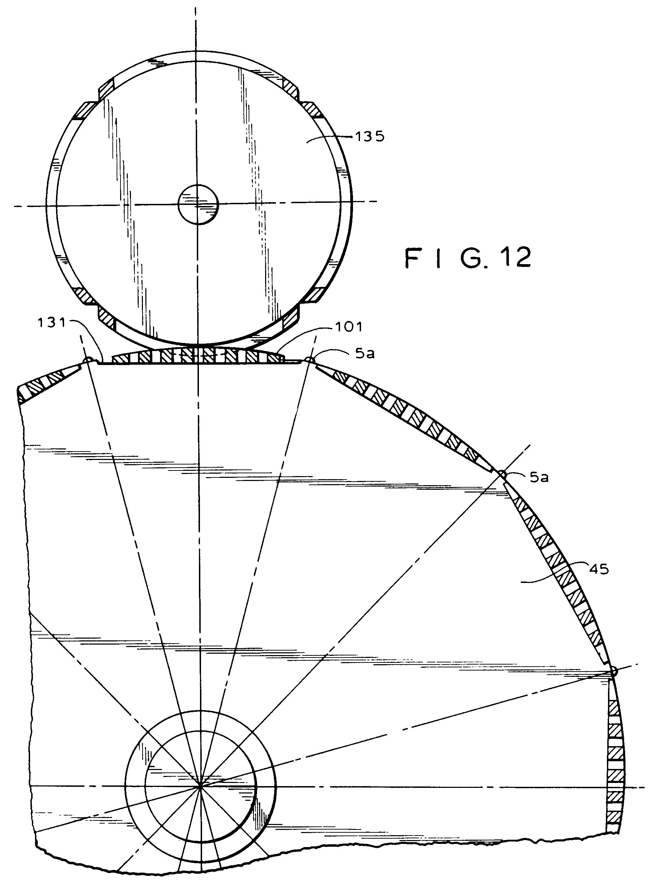

Elaborating in greater detail on another embodiment of the invention previously mentioned above, the glue supply wheel 75 and glue applicator wheel 85 may be inactivated or eliminated. In Fig. 3, a monolayer pressure sensitive label 10 as part of a unitary carrier tape 1, may be used which eliminates the need for applying glue 25 to the article 20. The label 10 still would be die cut on a printing press and retained on the carrier by three, four or more pinpoint attachment tabs 15 (shown in Fig. 2). There may be one or more pinpoint attachment tabs 15 at the leading edge of the label 10. The spent carrier tape 50 is peeled away from the label 10 by roller 95b with its label replicating cam surface 95c and the spent carrier tape 50 is removed by the uptake reel 40. In order to assure an even more positive removal of the monolayer, pressure sensitive label 10, a device may be used which may function to remove positively the labels 10 from carrier tape 1. This is accomplished by the device shown in Figure 12 herein. This device will be further explained. The label 10 is held in place by vacuum suction on the label transfer wheel 45 with the pressure sensitive gummed side exposed. The label 10 is released by a pressure means 115 (shown in Fig. 7) and thereby applied to an article at point 60 (Fig. 3) so that the gummed side adheres the label 10 to the article.

When a monolayer pressure sensitive label or tape is used, Teflon coated rollers, e.g., 95a and 95b are employed wherever the pressure sensitive adhesive contacts the machine 9. This prevents the label or tape from sticking to the rollers 95a and 95b, etc.

As mentioned before, the last roller 95b is positioned so that it assists the vacuum suction when the carrier tape 1 is removed from the label 10. An idle arm 2 (not shown), eddy current and magnetic brake are also employed to properly increase or decrease the tension as the carrier tape 1 is removed from the supply wheel and wound on the uptake reel 40. When either a glued-on label or a monolayer pressure sensitive label is used, precision is extremely important since the labels must be in proper registry with the can or container. Still, using a monolayer pressure sensitive label 10 may be preferable to using glue because there is a possibility of cans coming through without lids and the glue wheel may pick up particulates on its surface. Consequently, the glue wheel may then require down time for clean up and other like problems.

In place of roller 95b with a label replicating cam surface, label release wheel 135 as shown in Fig. 12 be positioned above the transfer wheel 45 and synchronously driven to sever the pinpoint attachment tabs 15 holding the label 10 to the carrier tape 1. The label release wheel 135 is positioned so that it pushes the carrier web around the label perimeter and down approximately 1/8 inch thereby severing the pinpoint attachment tabs 15 (not shown here). The pad 101 on the label transfer wheel 45 is raised 1/8 inch so that there is a recessed area 131 around each pad 101. The speed of rotation of the label release wheel 135 is three times the speed of the label transfer wheel 45. As both wheels spin, the periphery of the label release wheel 135 fits into the recessed area 131 around pad 101 and therefore severs the label 10. As described before, the label 10 has previously been positioned by the sprockets 5a and held by vacuum onto pad 101. This feature is particularly important for irregularly shaped labels and for monolayer pressure sensitive labels. For monolayer pressure sensitive labels, it is also important that surfaces be made of Teflon which contact the adhesive surface of the monolayer web. In any event, each component of the machine is appropriately sized and synchronized for outstanding efficiency.

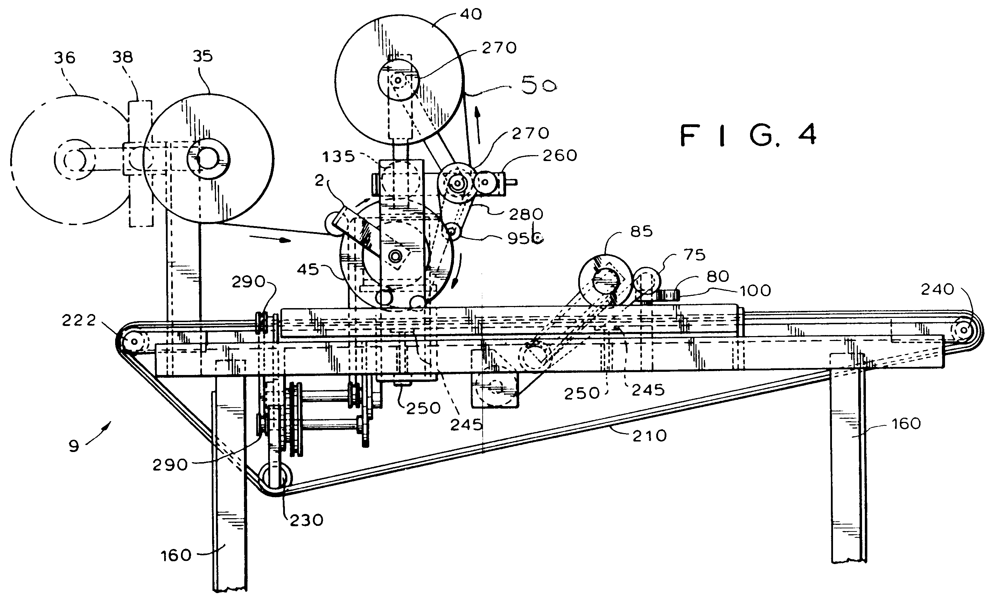

Fig. 4 is a side view of one embodiment of the high speed labeling machine 9 of the present invention. Shown is a standby label reel 36 and label reel 35 attached to a rotomation unit 38. The benefit of this feature is that the reels can be shifted without stopping the machine 9. After the standby reel 36 becomes the active label reel 35, the empty reel is replaced. In Fig.3, carrier tape 1 proceeds from the label reel 35 to the label transfer wheel 45. An idle arm 2 for tape tension control is also shown. Carrier tape 1 is shown running between wheel 45 and label release wheel 135. Spent carrier tape 50 continues around roller 95b and up to uptake reel 40. Glue supply wheel 75, glue supply source 80, doctor blade 100 and glue applicator wheel 85 are shown in position. Requisite supports, timing gears and belts are shown. Stand 160 supports machine 9. A continuous conveyor chain 210, in the form of a flat thin plate or tractor track like pads, are suitable for carrying articles 20 to be labeled. Chain 210 continuously rotates as shown from roller 240 to 222 to 230 to 240, etc. These rollers 222, 230 and 240 can be adjusted to adjust the tension in and length of the chain 210. A variable positioner pad 245, positioned by air cylinder 250, also adjusts the chain 210 by pushing it up or relaxing it to establish by fine tuning the spacing as the can passes tangentially along and under label transfer wheel 45.

Waste tension roller mounting 260 (shown in Fig. 4) helps to adjust the tension in the spent carrier tape 50 as it is wound onto uptake reel 40. Timing gears 270 and gear belts 280 act to help adjust the speed of rotation of uptake reel 40 and label transfer wheel 45 so that they act in concert to apply labels 10 and rewind spent carrier tape 50. Timing gears 290 are interconnected to turn screw helices 70 (not shown) in opposite directions. Fig. 5 more clearly shows a power source 105 and the interaction of the drive shafts and pulleys for precise timing.

Fig. 5 is a top view of the labeling machine 9 and screw helices 70. A single power source 105 drives at least the label transfer wheel 45, roller 95b, the uptake reel 40 and screw helices 70.

While not shown on the drawing, instead of toothed belts, appropriate sprocket and chains may interconnect to precisely time each component of the apparatus. Some adjustment is made, if necessary, to advance or retard any component so that each component of the machine is timed properly. The shafts and belts are rotated in the direction of the arrows. The glue supply wheel 75 may be driven by power source 105 or by a separate source not shown and the label reel 35 is not driven by any power source but rotates under the tension in the carrier tape 1 as the label transfer wheel 45 draws the carrier tape 1 from the label reel 35.

A shaft extension 106 is shown. It is attached to a series of pulleys via a toothed belt arranged to turn the screw helices 70 in opposite directions. Also shown is driven pulley 40c which drives pulley 40b via toothed belt 40d. Likewise, driven pulley 41c drives pulley 41b via toothed belt 41d. Any means which gives positive synchronization of all the components of machine 9 may be used.

In Fig. 6, cans 20 are illustrated as being advanced by a conveyor from a source of supply (not shown) in a solid column, moving in the direction of the arrow and between the oppositely rotating screw helices 70a and 70b. The helices 70a and 70b are so designed that as the cans 20 advance between them, the cans 20 are gradually separated. When they emerge from between the helices 70a and 70b, adjacent cans 20 are spaced uniform distances apart. The helices 70a and 70b may be turned in opposite direction and at a proper angular velocity by any suitable motion transmitting connection from a main drive shaft (not shown, but see Fig. 5 where shaft extension 106, attached to a series of pulleys arranged to turn the screw helices 70 in opposite directions via a toothed belt is shown and described). Likewise, the helices 70a and 70b may be placed vertically over one another and turned in an appropriate direction and at a proper angular velocity so that the cans advance between them and emerge uniform distances apart (as above) e.g., when using a horizontal embodiment of the machine for edge labeling a can. Further, a single helix 70 may be employed in combination with a smooth wall (not shown) so that the cans 20, advanced between the helix 70 and the wall, are positioned uniform distances apart. A timing screw is employed to control the timing of the left and the right (or upper and lower) helices 70a and 70b, and the pitch, and therefore the precise spacing of the helices 70a and 70b and the cans 20. As the helices 70a and 70b may be suitably designed to accomodate various container configurations, it is evident that the present machine may be adapted for a number of different types of containers.

It is contemplated that any spacing and orienting means may, if desired, be substituted for the arrangement herein shown in Fig. 6.

The label transfer wheel 45 is shown in section in Fig. 7. It contains a vacuum chamber 111. Vacuum chamber 111 is stationary with the drum rotating over it. The label transfer wheel 45 rotates about a shaft 42 and has projecting label pads 101 to which the labels 10 are adhered by vacuum suction 110 created in vacuum chamber 111. These pads, which are raised about 1/8 inch above the surface, are separated by recessed areas 131. No cutting mechanism is required as the labels may be pre-cut. Pressure is applied from a pressure chamber 115 to release the label 10 from the vacuum. Pressure chamber 115 likewise is stationary with the drum rotating over it. A label 10 is attached to the can 20 at point 60 either to the glue 25 layer, or if pressure sensitive, directly to the can.

Thus, an increased positive pressure is imparted by the pad 101 to release the label 10. The diameter of the pad 101 is the same as the diameter of the label 10. Elongated vacuum passage holes 205, (shown in cross section in Figure 8) are spaced as slots across the pads 101. This configuration results in minimum vacuum loss and allows vacuum to be retained on one side and pressure applied at the label application point 60 on the other. The vacuum starts only after labels 10 are placed on the pads 101. Additionally, positive pressure is imparted by the pads 101. The vacuum to pressure change is in cross-direction of the labeling machine.

Fig. 8 is a cross-sectional view of the label transfer wheel 45 of Fig. 7. Shown at the top of Fig. 8 is the label transfer wheel 45, with vacuum suction 111 holding label 10 to label pad 101; vacuum passage holes 205 are shown in this drawing. At the bottom of Fig. 8 is shown the pressure chamber 115 applying downward pressure in the direction of the arrow to release a label from the vacuum at point 60 where the label is attached to the article.

Accordingly, whenever pressure chamber 115 together with the raised label pad 101 cooperate, pressure is applied continuously at the point of tangency of pad 101 and the container 20. Thus, the pressure is applied at the leading edge of the label and continuously throughout the label in cross-machine direction. This feature provides one of the desired advantages of this labeling system as it improves placement accuracy and assures good, positive contact between label, adhesive and container at high rates of speed.

Moreover, as shown in Fig. 4, variable positioner pad 245, positioned by air cylinder 250, raising conveyor chain 210 provides for fine tuning the actual pressure exerted by label pad 101 on a container 20 which is being labeled.

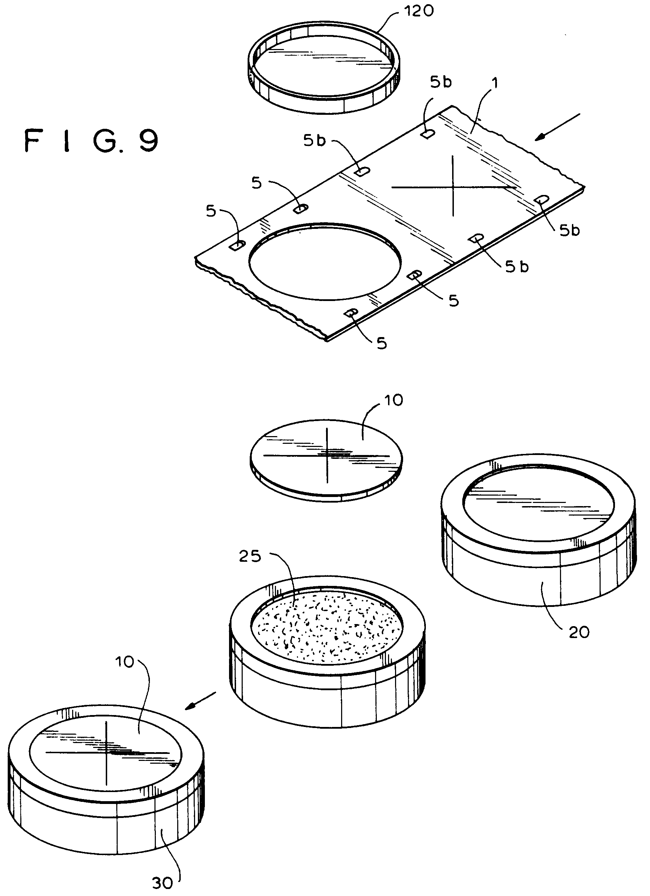

Figures 9 through 11 show another embodiment of the invention wherein a die cutter 120 replaces label release wheel 135. In this embodiment, the labels 10 are not pre-cut but rather are cut while they are on the label transfer wheel 45.

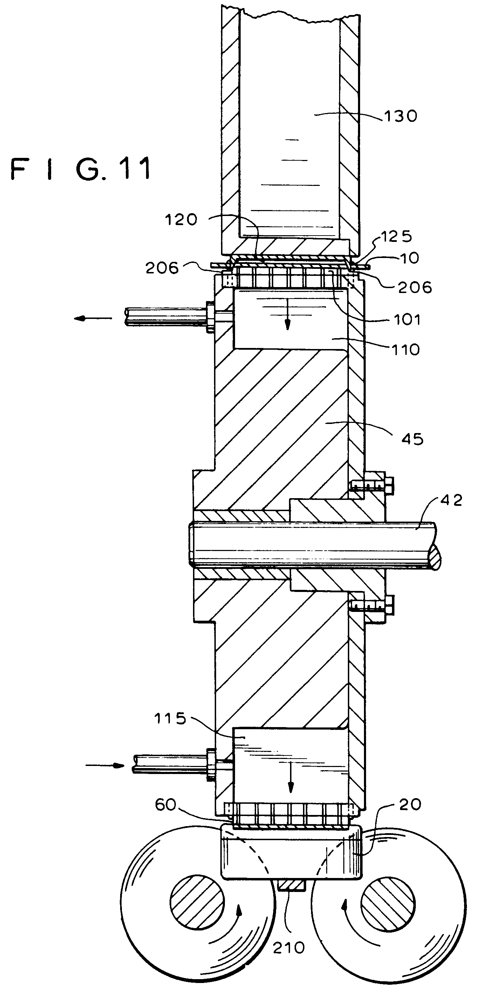

Fig. 9, like Fig. 2, shows a carrier tape 1 utilizing sprocket holes 5 for properly and accurately aligning a label 10. Additionally, a die for cutting a label is depicted in Fig. 9 by 120. The die is shown and described in more detail in Fig. 11.

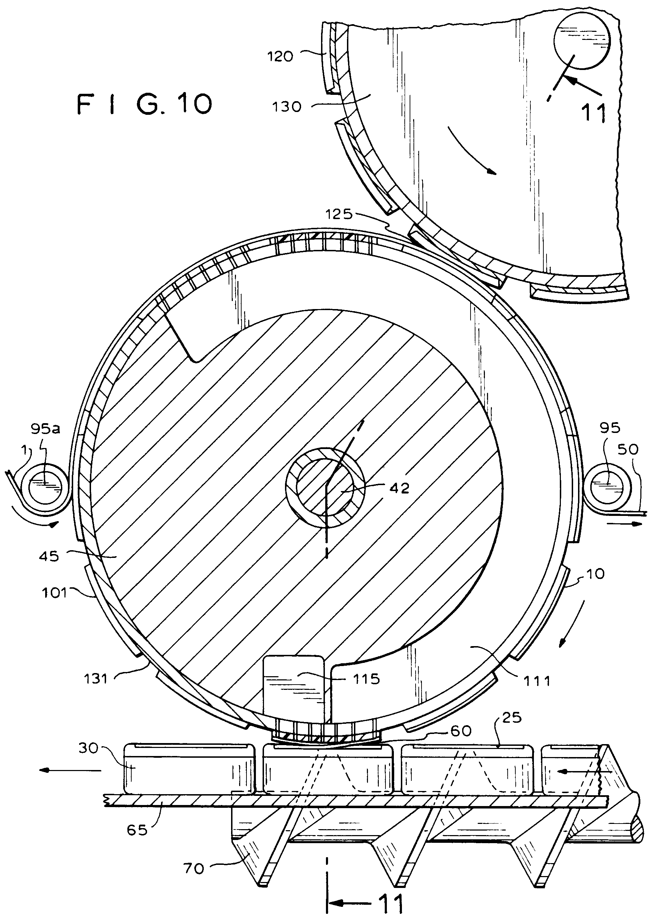

Fig. 10 depicts an enlarged side view, in section, showing details of the vacuum control mechanism for label manipulation and pressure means for label transfer from the label transfer wheel 45 as in Fig. 7. Fig. 10 additionally shows the die cutter wheel 130 for cutting labels at point 125 with die cutter 120. The die cutter 120 and label pad 101 are aligned at point 125 so that the label 10 is cut and held by vacuum suction 111 on label pad 101 as already described. The die cutter 120 is usually a rotary die of diameter 10 to 12 inches. Die cutter 120 can also have 3 or 4 dies, run at 4 or 3 times, respectively, the peripheral speed of label transfer wheel 45. As mentioned before, the label transfer wheel 45 has sprockets 5a for precise engagement. Sprockets 5a are smoothly conical in shape with a cylindrically shaped portion at the bottom. This eliminates the need for retractable pins as sprockets. When the die cutter 120 and label pad 101 are properly aligned, the die cutter 120 traverses the carrier tape 1 cutting label 10.

Fig. 11 is a cross-sectional view of the label transfer wheel 45 and the die cutter wheel 130. A series of dies are positioned around the perimeter of a wheel such as die cutter wheel 130 cut against a hardened anvil plate 206 around the perimeter of the pad 101. The label 10 is cut by die cutter 120 at label cutting point 125, and held by vacuum suction 111 on label pad 101 as described above.

Therefore, shown at the top of Fig. 11 is the die cutter wheel 130 with die cutter 120 at label cutting point 125. The label 10, held by vacuum suction 111 on label pad 101, is cut by die cutter 120 at point 125. Label transfer wheel 45 is also shown. It rotates about shaft 42. At the bottom of Fig. 11 is shown the pressure chamber 115 applying downward pressure in the direction of the arrow to release a label from the vacuum at point 60 where the label is attached to the article.

Fig. 12 was described earlier. It shows, in cross-section, label release wheel 135 positioned above the label transfer wheel 45. Label release wheel 135 is positioned so that it pushes the carrier web around the label perimeter and down approximately 1/8 inch thereby severing the pinpoint attachment tabs 15 (not shown). The pad 101 on label transfer wheel 45 is raised 1/8 inch so that there is a recessed area 131 around each pad 101. The speed of rotation of the label release wheel 135 is three times the speed of the label transfer wheel 45 or in any synchronous relationship to the size of each of the wheels 135 and 45. As both wheels spin, the periphery of the label release wheel 135 fits into the recessed area 131 around pad 101 and therefore severs the label 10. As the label 10 has previously been positioned by the spockets 5a and held by vacuum onto pad 101, the precise position for each label is being maintained during this step.

Of course, it is clear from this description that labels can be of any shape, and that the articles can be positioned so that the labels can be applied both on the vertical and on the horizontal. Additionally, the containers may be of different shape. Further advantages of the invention include the ease of cleaning because of the design. The apparatus of the invention works well both with and without glue. In a preferred embodiment, a label is applied to a top of a can. Preferably, the top of the can is flexible for ease of label application whether or not glue is used. Also, the labels may be replenished without stopping the line and every can is inspected and then rejected if it has no label.

While the invention has been particularly shown and described with reference to preferred embodiments thereof, it will be understood by those skilled in the art that the foregoing and other changes in form and details may be made therein without departing from the scope of the invention.

## Claims

1. Method for applying a label (10) to a flat surface of an advanced article (20) such as a container and the like comprising :
(i) supplying a label carrier tape (1) from a carrier wheel (35) to a vertically rotatable label transfer wheel (45) ;
(ii) engaging said label carrier tape (1) on said label transfer wheel (45) by sprockets (5a) thereon in precise registry of said label (10) with a raised pad (101) for said label (10) on said transfer wheel (45) ;
(iii) removing a label (10) from said carrier tape (1) ;
(iv) holding said label (10) by vacuum suction on said raised pad (101) for said label (10) on said transfer wheel (45) ;
(v) removing the spent carrier tape (1) from said transfer wheel (45) ;
(vi) aligning synchronously said label (10) on said raised pad (101) for said label (10) on said transfer wheel (45) with the flat surface of said article (20) as said article (20) is advanced ;
(vii) applying positive pneumatic pressure to a leading edge of said label (10) by means of said raised pad and retaining vacuum suction on the label behind the leading edge, upon placement of said label (10) on said article (20), to remove said label (10) from said raised pad (101) for said label (10) on said transfer wheel (45);
(viii) continuously applying the pneumatic pressure throughout the label surface as rotation progresses ; and
(ix) continously advancing said article (20).

2. The method as defined in claim 1 wherein said advanced article (20) has glue (25) on a surface to which said label (10) is applied.

3. The method as defined in claim 1 wherein said label carrier tape (1) is a monolayer with pre-die cut labels (10) therein.

4. The method as defined in claim 1 wherein said monolayer (1), after removal of said label (10) is respooled on a reel (40) for said labelless monolayer (50).

5. The method as defined in claim 1 wherein said label carrier tape (1) contains sprocket holes (5) and said label carrier and said label are held under constant tension as said label carrier is removed from a carrier wheel (35).

6. The method as defined in claim 1, wherein a plurality of sprocket holes (5) are cut in said carrier tape (1) in registry with a location for a label (10) on said carrier tape (1), said sprocket holes (5) being in the form of a U-shape with a tab (5b) attached to an open end of said U.

7. The method as defined in claim 1 wherein there is a depositing glue step on the surface of said advanced article (20) up stream from said synchronous aligning step (vi).

8. The method as defined in claim 1 wherein on a surface exposed to a viewer, said label carries label information.

9. The method as defined in claim 1 wherein a surface of said label (10) which is applied to said article (20) carries a pressure sensitive adhesive.

10. The method as defined in claim 1 wherein the label is applied onto a vertical surface of said article.

11. The method as defined in claim 1 wherein the label is applied onto a horizontal surface of said article.

12. The method as defined in claim 1 wherein the label is circular in shape.

13. The method as defined in claim 1 wherein the label is rectangular in shape.

14. The method as defined in claim 1 wherein the label is other than circular or rectangular in shape.

15. The method as defined in claim 1 wherein said label carrier tape bears pre-cut labels.

16. The method as defined in claim 1 wherein said label removing step (iii) comprises a label cutting step from said carrier tape with a die cutter.

17. A machine for rapid application of labels (10) from a label supply source (35) to a flat surface of containers, comprising :
(i) a label supply source (35) for labels (10) on a continuous label carrier tape (1), said continuous tape (1) comprising a plurality of labels (10) evenly spaced apart with a plurality of sprocket holes (5) for each label (10).
(ii) a rotatable transfer wheel (45) for said labels (10) for transferring individual labels (10) onto containers (20), including sprocket means (5a) thereon ;
(iii) means for guiding said tape (1) interconnected with positioning means for said label (10) and sprocket means (5a) for said label on said rotational transfer wheel (45) ;
(iv) means for severing individual labels (10) from said continuous tape (1) ;
(v) vacuum means within said rotational transfer means for precise registry of each individual label (10) on a peripheral surface of said rotational transfer wheel (45) for said label (10) ;
(vi) means for removing the spent carrier tape ;
(vii) means for synchronous, precisely spaced apart advancing of a container (20) with respect to the angular velocity of said rotational transfer wheel, and a label (10) on said rotational tranfer wheel ;
(viii) means for cross-machine direction tangential application of pneumatic pressure within said rotational transfer wheel for exerting pressure on said label (10) and said surface of the container (20) in precise registry therewith wherein said means for cross-machine direction tangential application of pneumatic pressure comprising cooperable mechanical means (115) and passage holes in the circumference of the label transfer wheel (45) for exerting direct positive pressure on said label (10) and said flat surface of said container by said rotational tranfer wheel for said labels,
characterized in that :
(ix) said transfer wheel (45) for said labels is vertically rotatable ;
(x) said label positioning means includes a plurality of raised pads (101) provided with said passage holes and
(xi) said means for cross-machine direction tangential application of pneumatic pressure are designed to apply the pressure from the leading edge of said label continuously throughout said label.

18. The machine as defined in claim 17, further comprising means for application of glue onto a surface of said container (20) for application of a label (10) on said glue (25).

19. The machine as defined in claim 18, wherein said means for application of glue include means for inactivating the same when said labels (10) carry pressure sensitive adhesive thereon.

20. The machine according to any one of claims 17 to 19, wherein means for synchronous precisely spaced apart advancing of said container comprises helix screw means.

21. The machine as defined in claim 20, wherein the helix screw means are double helix screw means.

22. The machine according to any one of claims 17 to 19, wherein the means for synchronous precisely spaced apart advancing of a container include conveyor means.

23. The machine as defined in claim 22, wherein the conveyor means include means for urging said conveyor means for engagement of a container with said label on said rotational transfer means for said labels.

24. The machine according to any one of claims 17 to 23, wherein said means for severing individual labels from said continuous tape comprises label replicating cam means for a partially pre-cut label within said continuous tape.

25. The machine according to any one of claims 17 to 23, wherein means for severing individual labels from a partially pre-cut continuous tape is a wheel with a raised surface oversized with respect to said partially pre-cut label on said rotational transfer means for said label with respect to an individual label thereon.

26. The machine according to any one of claims 17 to 23, wherein the means for severing individual labels from said continuous tape comprises die means for cutting individual labels from said continuous tape operatively interconnected with said rotational transfer means.

27. The machine according to any one of claims 17 to 26, wherein the same includes means for removal of a labelless continuous tape from said rotational transfer means.

## Patentansprüche

1. Verfahren zum Anbringen eines Etiketts (10) auf eine flache Oberfläche eines vorrückenden Gegenstands (20), wie ein Behälter oder dergleichen, mit den Schritten:
(i) Zuführen eines Etikettenträgerbands (1) von einem Trägerrad (35) zu einem vertikal drehbaren Etikettentransferrad (45);
(ii) in Eingriffnehmen des Etikettenträgerbands (1) auf dem Etikettentransferrad (45) mittels darauf angeordneten Perforationszähnen (5a), wobei das Etikett (10) genau mit einer erhabenen Auflage (101) für das Etikett (10) auf dem Transferrad (45) ausgerichtet ist;
(iii) Entfernen eines Etiketts (10) von dem Trägerband (1);
(iv) Halten des Etiketts (10) auf der erhabenen Auflage (101) für das Etikett (10) auf dem Transferrad (45) mittels Saugwirkung;
(v) Entfernen des verbrauchten Trägerbands (1) von dem Transferrad (45);
(vi) synchrones Ausrichten des Etiketts (10) auf der erhabenen Auflage (101) für das Etikett (10) auf dem Transferrad (45) mit der flachen Oberfläche des Gegenstands (20), während dieser Gegenstand (20) vorwärts bewegt wird;
(vii) Beaufschlagen einer vorlaufenden Kante des Etiketts (10) mit positivem pneumatischen Druck mittels der erhabenen Auflage und Beibehalten der Saugwirkung auf das Etikett hinter der vorlaufenden Kante bei dem Plazieren des Etiketts (10) auf den Gegenstand (20), um das Etikett (10) von der erhabenen Auflage (101) für das Etikett (10) auf dem Transferrad (45) zu entfernen;
(viii) kontinuierliches Beaufschlagen des pneumatischen Drucks über die gesamte Etikettoberfläche, während die Drehung fortschreitet;
(ix) kontinuierliches Vorwärtsbewegen des Gegenstands (20).

2. Verfahren nach Anspruch 1, bei dem der vorrückende Gegenstand (20) Klebstoff (25) auf einer Oberfläche aufweist, auf die das Etikett (10) aufgebracht wird.

3. Verfahren nach Anspruch 1, bei dem das Etikettenträgerband (1) eine Einzelschicht mit darin angeordneten vorgestanzten Etiketten (10) ist.

4. Verfahren nach Anspruch 1, bei dem die Einzelschicht (1) nach dem Entfernen des Etiketts (10) auf eine Spule (40) für die etikettenlose Einzelschicht (50) zurückgespult wird.

5. Verfahren nach Anspruch 1, bei dem das Etikettenträgerband (1) Perforationsöffnungen (5) aufweist und bei dem der Etikettenträger und das Etikett unter dauernder Spannung gehalten werden, während der Etikettenträger von einem Trägerrad (35) entfernt wird.

6. Verfahren nach Anspruch 1, bei dem eine Mehrzahl von Perforationsöffnungen (5) in dem Trägerband (1) ausgerichtet mit einer Stelle für ein Etikett (10) auf dem Trägerband (1) eingeschnitten sind, wobei diese Perforationsöffnungen (5) U-förmig mit einer an einem offenen Ende des U angeordneten Nase (5b) sind.

7. Verfahren nach Anspruch 1, das einen Schritt des Aufbringens von Klebstoff auf die Oberfläche des vorrückenden Gegenstands (20) stromauf von dem Schritt des synchronen Ausrichtens (vi) umfaßt.

8. Verfahren nach Anspruch 1, bei dem das Etikett auf einer einem Betrachter ausgesetzten Oberfläche Informationen trägt.

9. Verfahren nach Anspruch 1, bei dem eine Oberfläche des Etiketts (10), die auf den Gegenstand (20) aufgebracht wird, einen druckreaktiven Klebstoff trägt.

10. Verfahren nach Anspruch 1, bei dem das Etikett auf eine vertikale Oberfläche des Gegenstands aufgebracht wird.

11. Verfahren nach Anspruch 1, bei dem das Etikett auf eine horizontale Oberfläche des Gegenstands aufgebracht wird.

12. Verfahren nach Anspruch 1, bei dem das Etikett kreisförmig ist.

13. Verfahren nach Anspruch 1, bei dem das Etikett rechteckig ist.

14. Verfahren nach Anspruch 1, bei dem das Etikett eine andere Form als ein Kreis oder ein Rechteck aufweist.

15. Verfahren nach Anspruch 1, bei dem das Trägerband vorgeschnittene Etiketten trägt.

16. Verfahren nach Anspruch 1, bei dem der Schritt (iii) des Entfernen des Etiketts einen Schritt des Ausschneidens des Etiketts aus dem Trägerband mittels einer Stanze umfaßt.

17. Maschine zum schnellen Anbringen von Etiketten (10) von einer Etikettenversorgungsquelle (35) auf eine flache Oberfläche eines Behälters, die aufweist:
(i) eine Etikettenversorgungsquelle (35) für Etiketten (10) auf einem kontinuierlichen Etikettenträgerband (1), das eine Mehrzahl von gleichförmig voneinander beabstandeten Etiketten (10) mit einer Mehrzahl von Perforationsöffnungen (5) für jedes Etikett (10) aufweist;
(ii) ein drehbares Transferrad (45) für die Etiketten (10) zum Übertragen einzelner Etiketten (10) auf Behälter (20), das darauf angeordnete Perforationsmittel (5a) aufweist;
(iii) Mittel zum Führen des Bands (1), die mit Positioniermitteln für das Etikett (10) und Perforationszahnmitteln (5a) für das Etikett auf dem drehbaren Transferrad (45) verbunden sind;
(iv) Mittel zum Abtrennen einzelner Etiketten (10) von dem kontinuierlichen Band (1);
(v) Unterdruckmittel innerhalb des drehbaren Transfermittels zum präzisen Ausrichten jedes einzelnen Etiketts (10) auf einer Umfangsoberfläche des drehbaren Transferrads (45) für das Etikett (10);
(vi) Mittel zum Entfernen des verbrauchten Trägerbands;
(vii) Mittel zum synchronen, präzise beabstandeten Vorrükken eines Behälters (20) bezüglich der Winkelgeschwindigkeit des drehbaren Transferrads und eines Etiketts (10) auf diesem drehbaren Transferrad;
(viii) Mittel zum quer zur Maschine gerichteten tangentialen Beaufschlagen eines pneumatischen Drucks innerhalb des drehbaren Transferrads zum Ausüben eines Drucks auf das Etikett (10) und die damit genau in Deckung befindliche Oberfläche des Behälters (20), wobei die Mittel zum quer zur Maschine gerichteten tangentialen Beaufschlagen eines pneumatischen Drucks zusammenwirkende mechanische Mittel (115) und Durchtrittsöffnungen im Umfang des Etikettentransferrads (45) zum Ausüben eines direkten positiven Drucks auf das Etikett (10) und die flache Oberfläche des Behälters mittels des drehbaren Transferrads für die Etiketten aufweisen; dadurch gekennzeichnet, daß:
(ix) das Transferrad (45) für die Etiketten vertikal drehbar ist;
(x) die Etikettenpositioniermittel eine Mehrzahl von mit Durchtrittsöffnungen versehenen erhabenen Auflagen (101) umfassen;
(xi) die Mittel zum quer zur Maschine gerichtet tangentialen Beaufschlagen von pneumatischem Druck so ausgebildet sind, daß sie den Druck ausgehend von der vorlaufenden Kante des Etiketts kontinuierlich über das Etikett ausüben.

18. Maschine nach Anspruch 17, die weiter Mittel zum Aufbringen von Klebstoff auf eine Oberfläche des Behälters (20) zum Anbringen eines Etiketts (10) auf diesem Klebstoff (25) aufweisen.

19. Maschine nach Anspruch 18, bei dem die Mittel zum Aufbringen von Klebstoff Mittel zum Inaktivieren dieser Mittel umfassen, wenn die Etiketten (10) mit druckreaktivem Klebstoff versehen sind.

20. Maschine nach einem der Ansprüche 17 bis 19, bei dem die Mittel zum synchronen, präzise beabstandeten Vorrücken des Behälters Helixschraubenmittel aufweisen.

21. Maschine nach Anspruch 20, bei der die Helixschraubenmittel Doppelhelixschraubenmittel sind.

22. Maschine nach einem der Ansprüche 17 bis 19, bei der die Mittel zum synchronen, präzise beabstandeten Vorrücken eines Behälters Förderbandmittel umfassen.

23. Maschine nach Anspruch 22, bei der die Förderbandmittel Mittel umfassen, die die Förderbandmittel zu einem Eingriff eines Behälters mit dem Etikett auf dem drehbaren Transfermittel für die Etiketten drängen.

24. Maschine nach einem der Ansprüche 17 bis 23, bei der die Mittel zum Abtrennen einzelner Etiketten von dem kontinuierlichen Band Etikettenabschälmitnehmermittel für ein teilweise vorgeschnittenes Etikett innerhalb des kontinuierlichen Bands umfassen.

25. Maschine nach einem der Ansprüche 17 bis 23, bei der die Mittel zum Abtrennen einzelner Etiketten von einem teilweise vorgeschnittenen kontinuierlichen Band ein Rad mit einer erhabenen Oberfläche sind, das bezüglich des teilweise vorgeschnittenen Etiketts auf dem drehbaren Transfermittel für das Etikett bezüglich eines einzelnen Etiketts darauf Übergröße aufweist.

26. Maschine nach einem der Ansprüche 17 bis 23, bei der die Mittel zum Abtrennen einzelner Etiketten von dem kontinuierlichen Band Stanzmittel zum Ausstanzen einzelner Etiketten aus dem kontinuierlichen Band umfassen, die in Wirkverbindung mit den drehbaren Transfermitteln stehen.

27. Maschine nach einem der Ansprüche 17 bis 26, die Mittel zum Entfernen eines etikettenlosen kontinuierlichen Bands von den drehbaren Transfermitteln umfaßt.

## Revendications

1. Procédé pour l'application d'une étiquette (10) sur la surface plane d'un objet (20) en mouvement, tel une boîte ou autre, ce procédé comprenant :
(i) le déroulement d'un ruban porteur d'étiquettes (1) d'une roue porteuse (35) vers une roue de transfert d'étiquettes (45) tournant dans un plan vertical;
(ii) l'engagement dudit ruban porteur d'étiquettes (1) sur ladite roue de transfert d'étiquettes (45) au moyen de dents (5a) se trouvant sur celle-ci, ladite étiquette (10) étant en parfaite synchronisation avec un support saillant (101) situé sur ladite roue de transfert (45) et destiné à recevoir ladite étiquette (10);
(iii) l'enlèvement d'une étiquette (10) dudit ruban porteur (1);
(iv) le maintien par aspiration de ladite étiquette (10) sur ledit support saillant (101) se trouvant sur ladite roue de transfert (45);
(v) l'enlèvement, lorsqu'il ne porte plus d'étiquettes, du ruban porteur de ladite roue de transfert (45);
(vi) l'alignement synchrone de ladite étiquette (10) sur ledit support saillant (101) destiné à recevoir ladite étiquette (10), lequel se trouve sur ladite roue de transfert (45), avec la surface plane dudit objet (20) mis en place;
(vii) l'application d'une pression pneumatique positive sur le bord antérieur de ladite étiquette (10) au moyen dudit support saillant et le maintien de l'aspiration sur le reste de la surface de l'étiquette lors de l'application de ladite étiquette (10) sur ledit objet (20), de manière à assurer l'enlèvement de ladite étiquette (10) du support saillant (101) se trouvant sur ladite roue de transfert (45);
(viii) l'application continue de la pression pneumatique sur toute la surface de l'étiquette à mesure que la rotation se poursuit; et
(ix) l'avance continue dudit objet (20).

2. Le procédé tel que défini dans la revendication 1, dans lequel une partie de la surface dudit objet (20) en mouvement, destinée à recevoir ladite étiquette (10), est recouvert de colle (25).

3. Le procédé tel que défini dans la revendication 1, dans lequel ledit ruban porteur d'étiquettes (1) est un ruban monocouche dans lequel les étiquettes (10) ont été prédécoupées par une matrice.

4. Le procédé tel que défini dans la revendication 1, dans lequel le ruban monocouche (1), lorsqu'il ne porte plus d'étiquettes (10), est dirigé vers une bobine (40) destinée à recevoir le ruban monocouche dépourvu d'étiquettes (50).

5. Le procédé tel que défini dans la revendication 1, dans lequel le ruban porteur d'étiquettes (1) est muni de perforations de guidage (5) et dans lequel ledit ruban porteur d'étiquettes et ladite étiquette sont maintenus dans une tension constante lorsqu'on procède à l'enlèvement dudit ruban porteur d'étiquettes de la roue porteuse (35).

6. Le procédé tel que défini dans la revendication 1, dans lequel l'emplacement du ruban porteur (1) où se trouve l'étiquette (10) est entouré d'une série de perforations de guidage en forme de U et munies d'une languette fixée à l'extrémité libre dudit U.

7. Le procédé tel que défini dans la revendication 1, dans lequel intervient une phase de dépôt de colle sur la surface dudit objet en position (20), cette phase de dépôt de colle étant préliminaire à la phase d'alignement synchrone (vi).

8. Le procédé tel que défini dans la revendication 1, dans lequel des informations figurent sur une partie de ladite étiquette exposée à un lecteur optique.

9. Le procédé tel que défini dans la revendication 1, dans lequel une partie de ladite étiquette (10) appliquée audit objet (20) est munie d'un adhésif sensible à la pression.

10. Le procédé tel que défini dans la revendication 1, dans lequel l'étiquette est appliquée sur une surface verticale dudit objet.

11. Le procédé tel que défini dans la revendication 1, dans lequel l'étiquette est appliquée sur une surface horizontale dudit objet.

12. Le procédé tel que défini dans la revendication 1, dans lequel l'étiquette est circulaire.

13. Le procédé tel que défini dans la revendication 1, dans lequel l'étiquette est rectangulaire.

14. Le procédé tel que défini dans la revendication 1, dans lequel l'étiquette n'est ni circulaire ni rectangulaire, mais d'une forme différente.

15. Le procédé tel que défini dans la revendication 1, dans lequel des étiquettes prédécoupées se trouvent sur la bande porteuse d'étiquettes.

16. Le procédé tel que défini dans la revendication 1, dans lequel l'étape d'enlèvement d'une étiquette (iii) comprend son découpage, par une matrice de coupe, sur ledit ruban porteur.

17. Une machine assurant, à partir d'une source de fourniture d'étiquettes (35), un étiquetage rapide de la surface plane de boîtes, et comprenant :
(i) une source de fourniture d'étiquettes (35) pour des étiquettes (10) se trouvant sur un ruban continu porteur d'étiquettes (1), ledit ruban continu (1) comprenant un certain nombre d'étiquettes (10) disposées de manière régulière, une série de perforations de guidage (5) entourant chaque étiquette (10);
(ii) une roue de transfert rotative (45) assurant le transfert desdites étiquettes (10) sur des boîtes (20), ladite roue étant munie de dents (5a);
(iii) des moyens permettant de mettre ledit ruban (1) en engagement avec des moyens de positionnement pour ladite étiquette (10) et des dents (5a), pour ladite étiquette, se trouvant sur ladite roue de transfert rotative (45);
(iv) des moyens permettant l'enlèvement individuel de chaque étiquette (10) dudit ruban continu (1);
(v) la présence, à la périphérie de ladite roue de transfert rotative (45), de moyens d'aspiration assurant un positionnement précis de chaque étiquette (10) sur la surface périphérique de la roue (45) de transfert rotatif de ces étiquettes;
(vi) des moyens permettant l'enlèvement du ruban porteur lorsqu'il n'y a plus d'étiquettes;
(vii) des moyens permettant d'assurer l'avance synchrone de boîtes (20), séparées les unes des autres de manière régulière, en concordance avec la vitesse angulaire de ladite roue de transfert et d'une étiquette se trouvant sur cette roue de transfert;
(viii) des moyens pour appliquer, au travers de la machine, une pression pneumatique tangentielle au sein de ladite roue de transfert rotative, de manière à exercer une pression sur ladite étiquette (10) de même que sur ladite surface de la boîte (20), en un emplacement et à un moment précis, ces moyens d'application de pression faisant appel à des moyens mécaniques (115) et à des trous de passage situés dans la circonférence de la roue de transfert (45) pour exercer une pression positive directe sur ladite étiquette (10) ainsi que sur ladite surface plane de ladite boîte, caractérisés en ce que :
(ix) ladite roue de transfert (45) pour lesdites étiquettes tourne dans un plan vertical autour d'un axe;
(x) lesdits moyens de positionnement des étiquettes comprennent une série de supports saillants (101) pourvus desdits trous de passage et
(xi) lesdits moyens d'application de la pression au travers de la machine sont conçus pour que la pression s'exerce de manière continue, d'un bout à l'autre de l'étiquette.

18. Le machine telle que définie dans la revendication 17, comprenant en outre des moyens pour appliquer de la colle sur une partie de la surface de ladite boîte (20), de manière à appliquer ladite étiquette (10) sur ladite colle (25).

19. Le machine telle que définie dans la revendication 18, dans laquelle lesdits moyens d'application de la colle comportent des moyens pour inactiver cette application lorsque lesdites étiquettes (10) sont pourvues d'un adhésif sensible à la pression.

20. Le machine selon l'une quelconque des revendications 17 à 19, dans laquelle les moyens assurant l'avance synchrone desdites boîtes, séparée les unes des autres de manière égale, comprennent des vis hélicoïdales.

21. La machine telle que définie dans la revendication 20, dans laquelle les vis hélicoïdales sont des vis à double spirale.

22. La machine selon l'une quelconque des revendications 17 à 19, dans laquelle les moyens assurant l'avance synchrone des boîtes, séparée les unes des autres de manière égale, comprennent des moyens de transport.

23. La machine telle que définie dans la revendication 22, dans laquelle les moyens de transport comprennent des moyens pour conduire lesdits moyens de transport à mettre la boîte en contact avec ladite étiquette se trouvant sur lesdits moyens de transfert rotatifs desdites étiquettes.

24. La machine selon l'une quelconque des revendications 17 à 23, dans laquelle lesdits moyens d'enlèvement des étiquettes dudit ruban continu comprennent des moyens en forme de bossage, reproduisant la forme de l'étiquette, pour appliquer l'étiquette prédécoupée se trouvant sur le ruban continu.

25. La machine selon l'une quelconque des revendications 17 à 23, dans laquelle les moyens d'enlèvement des étiquettes prédécoupées se trouvant sur le ruban continu consistent en une roue comportant des surfaces saillantes surdimensionnées par rapport aux étiquettes prédécoupées et destinées à recevoir lesdites étiquettes prédécoupées se trouvant sur lesdits moyens de transfert rotatifs.

26. La machine selon l'une quelconque des revendications 17 à 23, dans laquelle les moyens d'enlèvement des étiquettes dudit ruban continu comprennent des matrices destinées à découper chaque étiquette se trouvant sur ledit ruban continu, lequel se trouve en liaison directe avec lesdits moyens de transfert rotatifs.

27. La machine selon l'une quelconque des revendications 17 à 23, comprenant des moyens d'enlèvement du ruban continu, vide d'étiquettes, desdits moyens de transfert rotatifs.
